(19) **Europäisches Patentamt**
**European Patent Office**
**Office européen des brevets**

(11) **EP 4 103 436 B1**

(12) **EUROPÄISCHE PATENTSCHRIFT**

(45) Veröffentlichungstag und Bekanntmachung des Hinweises auf die Patenterteilung:
**26.03.2025 Patentblatt 2025/13**

(21) Anmeldenummer: **21703649.0**

(22) Anmeldetag: **03.02.2021**

(51) Internationale Patentklassifikation (IPC):
**B60W 30/18** (2012.01) **B60W 30/095** (2012.01)

(52) Gemeinsame Patentklassifikation (CPC):
**B60W 30/18163; B60W 30/095; B60W 30/0953; B60W 30/0956;** B60W 2552/30; B60W 2552/53

(86) Internationale Anmeldenummer:
**PCT/EP2021/052531**

(87) Internationale Veröffentlichungsnummer:
**WO 2021/160488 (19.08.2021 Gazette 2021/33)**

(54) **VERFAHREN ZUR SPURWECHSELASSISTENZ, COMPUTERLESBARES SPEICHERMEDIUM SOWIE KRAFTFAHRZEUG**

METHOD FOR LANE CHANGE ASSISTANCE, COMPUTER-READABLE STORAGE MEDIUM AND MOTOR VEHICLE

PROCÉDÉ D'AIDE AU CHANGEMENT DE VOIE, SUPPORT DE STOCKAGE LISIBLE PAR ORDINATEUR ET VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.02.2020 DE 102020201755**

(43) Veröffentlichungstag der Anmeldung:
**21.12.2022 Patentblatt 2022/51**

(73) Patentinhaber: **Stellantis Auto SAS**
**78300 Poissy (FR)**

(72) Erfinder: **GIERTZSCH, Marc**
**65428 Rüsselsheim am Main (DE)**

(74) Vertreter: **ESIP**
**Stellantis**
**Service REIP**
**2-10, boulevard de l'Europe**
**78300 Poissy (FR)**

(56) Entgegenhaltungen:
**DE-A1- 102011 106 485**

- **BENDER PHILIPP ET AL: "The combinatorial aspect of motion planning: Maneuver variants in structured environments", 2015 IEEE INTELLIGENT VEHICLES SYMPOSIUM (IV), IEEE, 28 June 2015 (2015-06-28), pages 1386 - 1392, XP033209906, DOI: 10.1109/IVS.2015.7225909**
- **MORITZ WERLING ET AL: "Optimal trajectory generation for dynamic street scenarios in a Frenét Frame", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3 May 2010 (2010-05-03), pages 987 - 993, XP031708906, ISBN: 978-1-4244-5038-1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Vorliegend werden ein Verfahren zur Spurwechselassistenz, ein computerlesbares Speichermedium mit einem Computerprogrammprodukt sowie ein Kraftfahrzeug beschrieben.

Verfahren zur Spurwechselassistenz, Computerprogrammprodukte sowie Kraftfahrzeuge der eingangs genannten Art sind im Stand der Technik bekannt.

Verfahren zur Spurwechselassistenz sind im Allgemeinen bekannt. Entsprechende Spurwechselassistenten warnen im einfachen Falle vor möglichen Kollisionsgefahren durch andere Kraftfahrzeuge auf einer Zielspur, auf die ein entsprechendes Kraftfahrzeug von einer Ausgangsspur wechseln möchte. Manche Spurwechselassistenten können auch einen Eingriff in eine Lenkung des Kraftfahrzeugs ermöglichen, um aktiv einer Kollision mit einem anderen Kraftfahrzeug entgegenzuwirken.

Bekannte Spurwechselassistenten überwachen die Umgebung eines Kraftfahrzeugs, zum Beispiel vor und hinter dem Kraftfahrzeug, um Objekte zu identifizieren. Sodann wird anhand von Parametern wie beispielsweise einer Relativgeschwindigkeit der entsprechenden Objekte zum eigenen Kraftfahrzeug sowie einer Zeitkomponente ermittelt, ob eine Kollisionsgefahr vorherrscht oder nicht.

Aus der EP 3 489 926 A1 ist ein Spurwechselassistenzverfahren bekannt, umfassend: Identifizieren eines nicht empfohlenen Bereichs, in dem ein Spurwechsel nicht empfohlen wird, auf der Grundlage von Straßeninformationen einer Straße, auf der ein Fahrzeug fährt; Festlegen eines Bereichs als Zielregion, der für das betreffende Fahrzeug erforderlich ist, um die Spur zu wechseln, auf der Basis von Positionsinformationen und Fahrzeuggeschwindigkeitsinformationen des betreffenden Fahrzeugs; und wenn der Bestimmungszielbereich einen Teil oder die gesamte nicht empfohlene Region enthält, eine Feststellung, dass das betreffende Fahrzeug die Fahrspur nicht wechseln kann, und ein Ergebnis der Beurteilung ausgibt.

Ferner betrifft Bender Philipp et al: "The combinatorial aspect of motion planning: Maneuver variants in structured environments", 2015 IEEE Intelligent Vehicles Symposium (IV), IEEE, 28. Juni 2015, Seiten 1386-1392 ein Verfahren, zum Finden eine optimalen Trajektorie für ein Überholmanöver.

Aus Moritz Werling et al: "Optimal trajectory generation for dynamic street scenarios in a Frenet Frame", 2010 IEEE International Conference On Robotics And Automation, IEEE, , 3. Mai 2010, Seiten 987-993 ein Verfahren zum Erzeugen von Trajektorien mit einer Kollisionsvermeidung bekannt.

Die DE 10 2011 106485 A1 betrifft ein Verfahren zum Unterstützen eines Fahrers eines Kraftfahrzeugs in einer Gegenverkehrssituation mit einem dem Kraftfahrzeug auf einem Fahrstreifen des Kraftfahrzeugs entgegenkommenden Gegenverkehrsobjekt.

Nachteilig einem bekannten Verfahren ist, dass sie falsch-positive Warnungen erzeugen, d. h. Warnungen ausgeben oder Lenkeingriffe ausüben, obwohl dies anhand der Verkehrslage nicht nötig wäre. Solche falsch-positive Warnungen entstehen, unter anderem dann, wenn ein Straßenverlauf gekrümmt ist. Herkömmliche Approximationsverfahren sind, in der Regel, nicht in der Lage in solchen Regionen das Risiko einer Kollision korrekt vorherzusagen.

Somit stellt sich die Aufgabe, Verfahren zur Spurwechselassistenz, Computerprogrammprodukte, sowie Kraftfahrzeuge der eingangs genannten Art dahingehend weiterzubilden, dass weniger falsch-positive Warnungen bzw. Lenkeingriffe vorgenommen werden.

Die Aufgabe wird gelöst durch ein Verfahren zur Spurwechselassistenz, der eingangs genannten Art gemäß Anspruch 1, ein computerlesbares Speichermedium mit einem Computerprogrammprodukt gemäß dem nebengeordneten Anspruch 13 sowie ein Kraftfahrzeug gemäß dem nebengeordneten Anspruch 14.

Weiterführende Ausgestaltungen und Weiterbildungen sind Gegenstand der abhängigen Ansprüche.

Nachfolgend wird ein Verfahren zur Spurwechselassistenz beschrieben, wobei ein Kraftfahrzeug auf einer ersten Spur einer Straße in einer Richtung nicht parallel zur Spur fährt, wobei mithilfe von Umgebungssensorik wenigstens ein Objekt in einem Umgebungsbereich des Kraftfahrzeugs auf einer zur ersten Spur benachbarten zweiten Spur identifiziert wird, wobei eine Relativposition des wenigstens einen Objekts zum Kraftfahrzeug in Kraftfahrzeugkoordinaten ermittelt wird, wobei mithilfe der Umgebungssensorik ein Verlauf einer Spurmarkierung, die die erste Spur und die zweite Spur voneinander trennt, in Fahrtrichtung vor dem Kraftfahrzeug liegend in Kraftfahrzeugkoordinaten ermittelt wird, wobei anhand von Kraftfahrzeugsensorik eine Trajektorie des Kraftfahrzeugs in Kraftfahrzeugkoordinaten ermittelt wird, wobei für das wenigstens eine Objekt eine Objektzone ermittelt wird, wobei eine Kraftfahrzeugzone ermittelt wird, innerhalb derer Kollisionsgefahr herrscht, wobei die Kraftfahrzeugzone auf der zweiten Spur liegt, wobei geprüft wird, ob die Kraftfahrzeugzone und die Objektzone überlappen, wobei, wenn die Kraftfahrzeugzone und die Objektzone überlappen, ein ein Kollisionsrisiko definierendes Signal erzeugt wird, wobei die Kraftfahrzeugzone und die Objektzone in $\lambda$- $\delta$-Koordinaten angegeben werden, wobei $\delta$ einen Abstand eines Punktes der Objektzone von der Spurmarkierung beschreibt, wobei $\lambda$ eine Länge entlang der Spurmarkierung beschreibt. Die Kraftfahrzeugzone $\lambda$- $\delta$-Koordinaten wird entlang der Spurmarkierung in einer vorgegebenen Breite bestimmt, wobei eine Länge der Spurmarkierung als Produkt einer Maximalzeit und der relativen Geschwindigkeit des Kraftfahrzeugs und des wenigstens einen Objekts zueinander bestimmt wird.

Der Spurwechselwunsch kann aus mehreren Umständen abgeleitet werden. Einerseits kann Fahren des Kraftfahrzeuges nicht parallel zur Spur darauf hinweisen, dass ein Spurwechsel bevorsteht, da das entsprechende Kraftfahrzeug in diesem Falle sich einer Spurgrenze nähert. Andererseits kann ein aktivierter Blinker auf einen entsprechenden Spurwechselwunsch hinweisen.

Entsprechende Umgebungssensorik kann beispielsweise Kameras, Radarsensoren, Lidarsensoren, Ultraschallsensoren als auch Kommunikationsvorrichtungen umfassen, beispielsweise Car2X-Kommunikationsmittel.

Das betreffende, erkannte Objekt kann zum Beispiel in die gleiche Richtung - bei einer Straße mit mehreren Spuren in eine Richtung oder selbst im Überholvorgang befindlich - oder in die Gegenrichtung z.B. bei einer zweispurigen Straße fahren.

Kraftfahrzeugkoordinaten sind definiert durch ein Koordinatensystem, das statisch zum Kraftfahrzeug ist. Der Vorteil der Verwendung von Kraftfahrzeugkoordinaten ist, dass die betreffenden Messgrößen der Sensoren betreffend die Umgebung in aller Regel bereits in Kraftfahrzeugkoordinaten ermittelt werden, da die entsprechenden Sensoren, die zur Erfassung der Umgebung verwendet werden, in der Regel ortsfest am Kraftfahrzeug verbaut sind. Die Kraftfahrzeugkoordinaten können ein zwei- oder dreidimensionales Koordinatensystem aufspannen, das beispielsweise seinen Ursprung an der Hinterachse oder an der Vorderachse aufweist. Eine erste Richtung kann dann in Fahrzeuglängsrichtung definiert sein, eine zweite Richtung senkrecht dazu in eine Fahrzeugquerrichtung. Sofern eine Fahrzeughochrichtung erforderlich ist, kann diese auf den beiden vorgenannten Richtungen senkrecht stehen.

Es kann sinnvoll sein, die Position der Umgebungssensorik in den Kraftfahrzeugkoordinaten zu kennen, um eine einfache Umrechnung durch Vektoraddition auf absolute Kraftfahrzeugkoordinaten zu ermöglichen. Wenn beispielsweise ein Sensor, 3 m vor der Hinterachse auf der x-Achse angeordnet ist, so liegt der Sensor bei (3,0) in Kraftfahrzeugkoordinaten und seine Sensormesswerte müssen entsprechend umgerechnet werden.

Durch Definition einer Kraftfahrzeugzone und einer Objektzone, die im Falle eines Kollisionsrisikos überlappen, kann eine relativ einfache und zuverlässige Bestimmung eines Kollisionsrisikos erfolgen.

Ein entsprechendes Signal kann ein Warnsignal sein. Es kann alternativ oder zusätzlich dazu dienen, ein Gegenlenkmoment zu generieren, dass das Kraftfahrzeug in der betreffenden Spur hält.

Die Verwendung von $\lambda$- $\delta$-Koordinaten erlaubt die Reduktion von falsch-positiven Warnungen, wie sie bei herkömmlichen Systemen vorkommen können. Einerseits ist $\lambda$ stets entlang der Spurmarkierung orientiert, sodass die entsprechenden Zonen in kartesischen Koordinaten betrachtet nicht nur rechteckig sind, sondern einem Straßenverlauf, definiert durch die Spurmarkierung, folgen. $\delta$ definiert sich dann über den Abstand eines Punktes von der Spurmarkierung.

Dadurch, dass die Kraftfahrzeugzone in $\lambda$- $\delta$-Koordinaten entlang der Spurmarkierung in einer vorgegebenen Breite bestimmt wird, wird erreicht, dass die betreffende Kraftfahrzeugzone korrekt auf der Straße platziert ist und auch den Straßenverlauf berücksichtigt, da die Spurmarkierung den Straßenverlauf in aller Regel korrekt wiedergibt.

Die vorgegebene Breite kann eine Breite des Kraftfahrzeugs zuzüglich etwaiger Sicherheitsabstände zu beiden Seiten umfassen, sodass gewisse folgende Abweichungen von der Trajektorie mit abgedeckt sind.

Die Maximalzeit kann von mehreren Kriterien abhängen. Einerseits kann sie von der Geschwindigkeitsdifferenz des Kraftfahrzeugs und eines zu überholenden Objektes und einzuhaltender Sicherheitsabstände abhängen. Andererseits kann die Geschwindigkeit eines auf der Zielspur in gleicher Richtung oder in Gegenrichtung fahrenden Kraftfahrzeugs berücksichtigt werden, indem anhand der Geschwindigkeitsdifferenz in Spurrichtung der betreffenden Kraftfahrzeuge eine für den Überholvorgang oder ein Abbremsen notwendigen Zeit eine Länge definiert werden.

Die Geschwindigkeit kann ebenfalls in $\lambda$- $\delta$-Koordinaten transformiert werden.

In einer ersten weiterführenden Ausgestaltung kann vorgesehen sein, dass ein Spurhalteassistent deaktiviert wird, wenn ein Spurwechselwunsch signalisiert wird.

In vielen Kraftfahrzeugen mit Spurwechselassistenz ist auch ein Spurhalteassistent vorgesehen, der dazu dient, das Kraftfahrzeug in einer entsprechenden Spur zu halten. Anhand der Fahr- und Fahrzeugparameter errechnet der Spurhalteassistent ein Lenkmoment, das an einer Lenkung aufgebracht werden muss. Ein Spurwechsel ist in der Regel nur dann möglich, wenn ein Blinker gesetzt wird und dadurch ein Spurwechselwunsch angezeigt wird.

Durch Zusammenspiel von Spurwechselassistenz und Spurhalteassistent kann auf bestehende Systeme zurückgegriffen werden, die miteinander kommunizieren. Hierdurch ist es nicht erforderlich, eine eigene Steuerung zum Eingriff in eine Lenkung des Kraftfahrzeugs vorzusehen. Des Weiteren können Konflikte durch widersprüchliche Regeleingriffe zwischen einer solchen Steuerung und einem aktivierten Spurhalteassistenten vermieden werden.

In einer weiteren weiterführenden Ausgestaltung kann vorgesehen sein, dass der Spurhalteassistent reaktiviert wird, wenn das ein Kollisionsrisiko definierende Signal von einer Steuerung empfangen wird.

Wenn, wie zuvor beschrieben, der Spurhalteassistent beim Spurwechsel deaktiviert wurde, aber eine Kollisionsgefahr erkannt wurde, kann mithilfe einer Reaktivierung des Spurhalteassistenten ein Lenkmoment erzeugt werden, das das Kraftfahrzeug in der Spur hält.

In einer weiteren weiterführenden Ausgestaltung kann vorgesehen sein, dass von der Umgebungssensorik erkannte Objekte verworfen werden, die sich nicht auf der Straße befinden.

Durch Verwerfen von Objekten, die sich nicht auf der Straße befinden, kann die Anzahl von notwendigen Analysen zur Beurteilung der Verkehrssituation reduziert werden.

In einer weiteren weiterführenden Ausgestaltung kann vorgesehen sein, dass der Verlauf der Spurmarkierung als Polynomfunktion in den Kraftfahrzeugkoordinaten approximiert wird.

Straßen sind in aller Regel als Klothoide aufgebaut, die auch als Euler-Spiralen bekannt sind. Solche Straßenverläufe lassen sich in aller Regel durch eine Polynomfunktion approximieren.

Eine solche Polynomfunktion kann zur Reduktion der notwendigen Rechenleistung und der notwendigen Rechenschritte in der 3. Ordnung abgeschnitten sein, sodass sich zur Approximation des Straßenverlaufs in Kraftfahrzeugkoordinaten eine Funktion des Typs:

$$f: D \to \mathbb{R}, x \mapsto \sum_{0 \leq i \leq 3} a_i x^i$$

ergibt.

Um die Abweichung zwischen der Annäherung und dem tatsächlichen Straßenverlauf zu reduzieren, kann vorgesehen sein, die betreffende Funktion abschnittsweise zu definieren, also den Straßenverlauf in Domänen aufzuteilen und jeweils eine Funktion pro Domäne zu berechnen.

Bei solchen Übergängen besteht die Gefahr, dass die Funktion an den Übergängen zwischen zwei benachbarten Domänen zwar differenzierbar, aber nicht notwendigerweise glatt ist. Dies kann zu Problemen bei der Durchführung des Verfahrens führen, da die Ergebnisse für zwei benachbarte Domänen am Übergang unterschiedlich ausfallen können, sodass diese nicht eindeutig sind. Aus diesem Grund kann in einer weiterführenden Ausgestaltung als zusätzliche Maßgabe vorgesehen sein, dass die Polynomfunktionen an den Domänenübergängen glatt sind. In einer alternativen Ausgestaltung kann das mathematische Modell so ausgestaltet sein, dass ein Objekt stets nur in einer Domäne berechnet wird und dann an eine angrenzende Domäne übergeben wird, wenn das Objekt die Domänengrenze erreicht. In diesem Fall können die Domänen als nicht aneinander anstoßend bezeichnet werden.

Die Verwendung einer entsprechenden Polynomfunktion erlaubt eine schnelle Berechnung der Kraftfahrzeugzone und der Objektzone in $\lambda$- $\delta$-Koordinaten, also im Zusammenhang mit dem konkreten Straßenverlauf, wobei die Berechnungen mithilfe von numerischen Methoden mit vertretbarem Rechenaufwand möglich sind.

In einer weiteren weiterführenden Ausgestaltung kann vorgesehen sein, dass die Trajektorie aus Geschwindigkeit und Lenkwinkel des Kraftfahrzeugs in Kraftfahrzeugkoordinaten bestimmt wird.

Wenn die Trajektorie aus Geschwindigkeit und Lenkwinkel des Kraftfahrzeugs in Kraftfahrzeugkoordinaten bestimmt wird, ist es möglich, diese ebenfalls als Polynomfunktion anzugeben. Eine entsprechende Polynomfunktion kann wie folgt aussehen:

$$e: \mathbb{R}_0^+ \to \mathbb{R}, x \mapsto \sum_{0 \leq i \leq 2} \varepsilon_i x^i, \varepsilon_0 = 0.$$

Ein Abschneiden bei der zweiten Ordnung ist dabei akzeptabel, da dadurch eine hinreichende Genauigkeit erreicht wird. Dabei ist $\varepsilon_0$ stets gleich 0. Der Pfad endet stets im Ursprung des Kraftfahrzeugkoordinatensystems, weil der Pfad nie seitlich versetzt zum Kraftfahrzeug sein kann.

In Kombination der beiden zuvor beschriebenen Polynomfunktionen ist es möglich zu bestimmen, wann das Kraftfahrzeug die Spurmarkierung erreicht. Dazu ist es erforderlich, die Position einer vorderen Ecke des Kraftfahrzeugs auf der entsprechenden Seite, auf der der Spurwechsel stattfinden soll, in Kraftfahrzeugkoordinaten zu kennen, den Fahrzeugpfad auf diesen Punkt zu verschieben und dann mit der Polynomfunktion der Spurmarkierung gleichzusetzen.

Unter Kenntnis der aktuellen Geschwindigkeit des Kraftfahrzeugs kann dann eine Zeit bestimmt werden, die es brauchen wird, bis das Kraftfahrzeug die Spurmarkierung erreicht.

In einer weiteren weiterführenden Ausgestaltung kann vorgesehen sein, dass Sensorinformationen verschiedener Umgebungssensoren zusammengeführt werden.

Das Zusammenführen verschiedener Sensorinformationen ergibt ein komplexeres Abbild über die Straßen- und Verkehrssituation. Messfehler der verschiedenen Sensortypen können durch Plausibilisierung reduziert werden, was die Datenqualität erhöht.

In einer weiteren weiterführenden Ausgestaltung kann vorgesehen sein, dass die vorgegebene Breite als euklidischer Abstand zur Polynomfunktion in Kraftfahrzeugkoordinaten bestimmt wird. Dies deckt sich mit den $\lambda$- $\delta$-Koordinaten.

Die Bestimmung eines euklidischen Abstands zur Polynomfunktion ist numerisch mit geringem Rechenaufwand möglich. Dabei wird der Abstand des Punktes als Minimum des Abstandes des Punktes zur Polynomfunktion definiert. Dazu sind einfache Ableitungsvorgänge erforderlich, die zu einer fest ein programmierbaren Formel führen, die mithilfe konkreter Parameter $a_{i,j}$ geführt werden kann.

In einer weiteren weiterführenden Ausgestaltung kann vorgesehen sein, dass ein Startpunkt der Kraftfahrzeugzone von einem Kreuzungspunkt des Kraftfahrzeugs mit der Spurmarkierung bestimmt wird, wobei ein Endpunkt der Kraftfahrzeugzone definiert wird als der Punkt, an dem ein Linienintegral der Polynomfunktion der Spurmarkierung die gleiche Länge hat wie die Geschwindigkeit des Kraftfahrzeugs multipliziert mit der maximalen Zeit.

Eine Länge der Kraftfahrzeugzone definiert sich somit, konsistent zu den $\lambda$-$\delta$-Koordinaten, als Länge entlang der Spurmarkierung. Hierdurch kann die Länge korrekt entlang der Spurmarkierung abgebildet werden.

In einer weiteren weiterführenden Ausgestaltung kann vorgesehen sein, dass die wenigstens eine Objektzone der Ort des wenigstens einen Objektes darstellt.

Grundsätzlich sind zwei Varianten denkbar. Eine erste Variante ist, dass für jedes Objekt eine eigene, räumlich in Fahrt- oder Bewegungsrichtung des Objekts ausgedehnte Objektzone berechnet wird und dann zur Kollisionsprüfung ein Überlapp der Objektzonen bestimmt wird. Hierdurch ist es möglich, beispielsweise Informationen betreffend der Trajektorien der anderen Objekte mit einfließen zu lassen. Eine solche Objektzone kann besonders präzise sein.

Wenn eine ausgedehnte Objektzone um das entsprechende Objekt berechnet wird, ist es sinnvoll, die Objektzone im Kraftfahrzeugkoordinatensystem zu definieren. Die Breite der Objektzone kann dann, konsistent zu $\lambda$-$\delta$-Koordinaten, wie zuvor anhand der Polynomfunktion der Spurmarkierung parallel zur Spurmarkierung liegen. Dabei kann beispielsweise der aktuelle Ort und der aktuelle Abstand des Objekts in $\lambda$-$\delta$-Koordinaten zur Spurmarkierung als Startpunkt dienen und eine Objektbreite entweder vorgegeben sein oder anhand der Breite des Objektes bestimmt werden, wobei es möglich ist, gewisse Sicherheitsabstände seitlich des Objektes vorzusehen.

In einer zweiten Variante ist es vereinfacht jedoch auch möglich, die Objektzone durch den Ort des entsprechenden Objektes zu definieren, also als Punkt, und die entsprechenden Objektinformationen als Relativinformationen zu verwenden, beispielsweise Relativgeschwindigkeit zwischen dem Kraftfahrzeug und dem Objekt, und eine Relativposition zu verwenden. Dies erhöht den Aufwand zur Berechnung der Kraftfahrzeugzone, da diese aufgrund der Relativgeschwindigkeit zum Objekt verschoben werden muss. Andererseits muss in diesem Fall nur geprüft werden, ob das Objekt innerhalb des berechneten Kraftfahrzeugbereichs liegt. Ist dies der Fall, kann eine Kollisionswarnung ausgegeben werden. Ist dies nicht der Fall, ist ein entsprechender Spurwechsel gefahrlos möglich.

In einer weiteren weiterführenden Ausgestaltung kann vorgesehen sein, dass die Objektzone eine vorgegebene Breite aufweist, wobei die Breite über einen euklidischen Abstand zur Polynomfunktion bestimmt wird. Dies ist konsistent zur Verwendung von $\lambda$-$\delta$-Koordinaten.

In einer weiteren weiterführenden Ausgestaltung kann vorgesehen sein, dass die Objektzone eine vorgegebene Länge aufweist, die der Geschwindigkeit des Objekts multipliziert mit der maximalen Zeit entspricht.

Die Objektzone kann in einer Ausgestaltung einen Unschärfebereich abdecken, der Messungenauigkeiten bei der Bestimmung der Relativposition des wenigstens einen Objekts und/oder Ausdehnungen des Objekts berücksichtigt.

Im Falle einer ausgedehnten Objektzone kann die Länge in einer anderen oder zusätzlichen Ausgestaltung über das Linienintegral der Polynomfunktion der Spurmarkierung bestimmt werden, um diese in $\lambda$-$\delta$-Koordinaten darzustellen.

Ein weiterer unabhängiger Gegenstand betrifft ein computerlesbares Speichermedium mit einem Computerprogrammprodukt, dass Befehle enthält, die, wenn sie von wenigstens einer Recheneinheit ausgeführt werden, bewirken, dass die wenigstens eine Recheneinheit dazu eingerichtet ist, das Verfahren der vorgenannten Art auszuführen.

Das Verfahren kann auf einer oder auf mehreren Recheneinheiten verteilt ausgeführt werden, sodass bestimmte Verfahrensschritte auf der einen Recheneinheit und andere Verfahrensschritte auf wenigstens einer weiteren Recheneinheit ausgeführt werden, wobei berechnete Daten sofern notwendig zwischen den Recheneinheiten übermittelt werden können.

Ein weiterer unabhängiger Gegenstand betrifft ein Kraftfahrzeug mit einer Vorrichtung umfassend Mittel zur Durchführung des erfindungsgemäßen Verfahrens.

Weitere Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand, gegebenenfalls auch unabhängig von den Ansprüchen, und können insbesondere zusätzlich auch Gegenstand einer oder mehrerer separater Anmeldung/en sein. Gleiche, ähnliche und/oder funktionsgleiche Teile sind mit gleichen Bezugszeichen versehen. Dabei zeigen schematisch:

Fig. 1     eine Draufsicht auf ein Kraftfahrzeug;

Fig. 2     einen konzeptionellen Aufbau eines Fahrassistenzsystems;

Fig. 3     eine erste Fahrsituation auf einer ersten Straße;

Fig. 4     eine zweite Fahrsituation auf einer zweiten Straße;

Fig. 5     eine Transformation von Objektkoordinaten zu $\lambda$-$\delta$-Koordinaten, sowie

Fig. 6     eine weitere Darstellung der $\lambda$-$\delta$-Koordinaten in einem Koordinatensystem.

Gleiche oder gleichwirkende Elemente werden in den nachfolgenden Beschreibungen zur besseren Lesbarkeit mit gleichen Bezugszeichen versehen.

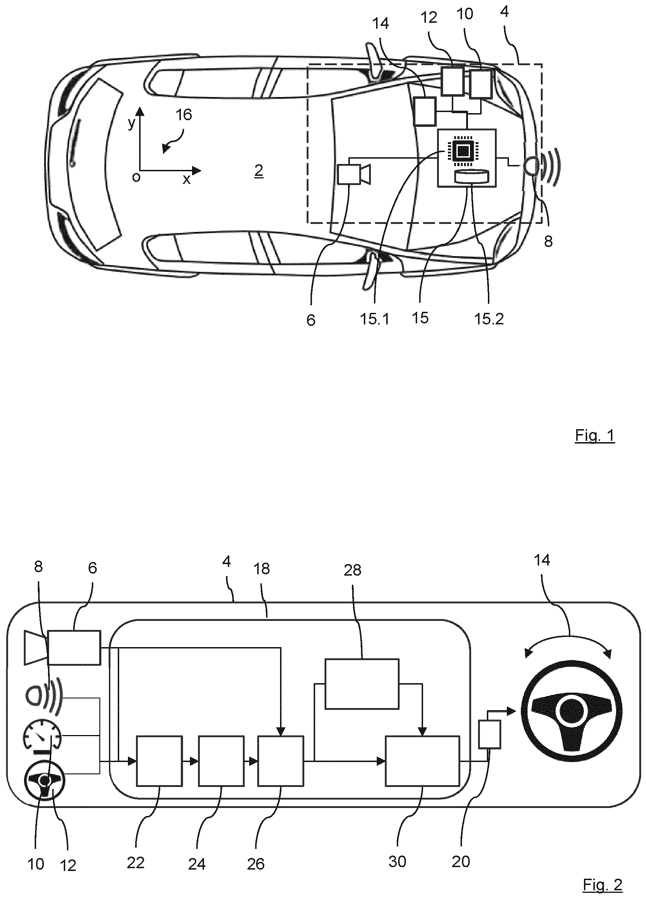

Fig. 1 zeigt eine Draufsicht auf ein Kraftfahrzeug 2.

Das Kraftfahrzeug 2 ist mit einem Fahrassistenzsystem 4 ausgerüstet. Bestandteile des Fahrassistenzsystems 4 sind gestrichelt umrahmt. Das Fahrassistenzsystem 4 weist unter anderem eine Kamera 6 auf. Die Kamera 6 ist in einer Fahrtrichtung des Kraftfahrzeugs 2 nach vorne ausgerichtet und erfasst einen Bereich vor dem Kraftfahrzeug 2. Des Weiteren ist ein Radarsensor 8 an einer Front des Kraftfahrzeugs 2 angeordnet. Der Radarsensor 8 überwacht somit ebenfalls einen Bereich vor dem Kraftfahrzeug. Das Fahrassistenzsystem 4 kann weitere Sensorik aufweisen, die vorliegend zur Wahrung der Übersichtlichkeit nicht dargestellt sind, beispielsweise entsprechende Kameras und Sensorik, die nach hinten und/oder zur Seite gerichtet sind, sowie andere Sensoren, beispielsweise Ultraschallsensoren. Des Weiteren sind ein Raddrehzahlsensor 10, ein Lenkwinkelsensor, 12 sowie ein Lenkaktuator 14 vorgesehen.

Kamera 6, Radarsensor 8, Raddrehzahlsensor 10, Lenkwinkelsensor 12 sowie Lenkaktuator 14 sind mit einer Steuerung 15 verbunden. Die Steuerung 15 weist eine Recheneinheit 15.1 sowie einen Speicher 15.2 auf. In dem Speicher 15.2 ist ein Computerprogrammprodukt gespeichert, das, wenn es von der Recheneinheit 15.1 geladen und ausgeführt wird, das im Nachfolgenden genauer beschriebene Verfahren durchführt. Durch die Kombination der von den Sensoren 6, 8, 10, 12 aufgenommenen Messwerten und der Möglichkeit zum Eingriff in den Lenkaktuator 14 kann eine effektive Reduktion von Kollisionen im Straßenverkehr beim Spurwechsel erreicht werden.

Des Weiteren ist ein Kraftfahrzeugkoordinatensystem 16 dargestellt. Das Koordinatensystem 16 weist einen Ursprung o auf, der auf der Mitte einer Hinterachse (nicht dargestellt) des Kraftfahrzeuges 2 angeordnet ist. Eine erste Richtung x ist als Kraftfahrzeuglängsrichtung definiert, eine zweite Richtung y als Kraftfahrzeugquerrichtung. Im vorliegenden Fall ist das Vorsehen einer dritten Dimension nicht erforderlich, da sämtliche Vorgänge stra-ßengebunden sind, also auf der Straßenebene stattfinden.

Die nachfolgend beschriebenen Berechnungen werden innerhalb des Kraftfahrzeugkoordinatensystems 16 vorgenommen.

Fig. 2 zeigt den konzeptionellen Aufbau des Fahrassistenzsystems 4.

Das Fahrassistenzsystem 4 weist ein Spurwechselassistenzmodul 18 sowie ein Spurhalteassistenzmodul 20 auf. Das Spurwechselassistenzmodul 18 ist mit dem Spurhalteassistenzmodul 20 verbunden. Das Spurhalteassistenzmodul 20 wirkt auf den Lenkwinkelaktuator 14.

Das Spurwechselassistenzmodul 18 weist ein Datenfusionsmodul 22 auf. In dem Datenfusionsmodul 22 werden eingehende Sensorsignale der angeschlossenen Sensoren; Kamera 6, Radarsensor 8, Raddrehzahlsensor 10 sowie Lenkwinkelsensor 12 zu einem Gesamtbild verarbeitet.

Ein Auswahlmodul 24 wählt diejenigen Objekte aus, die für das Kraftfahrzeug 2 relevant sind, also nur solche, die sich auf der Straße, auf der das Kraftfahrzeug 2 gerade fährt, befinden.

Sodann werden diese Informationen einem Transformationsmodul 26 zugeführt und im Transformationsmodul 26 $\lambda$-$\delta$-transformiert. Die Kamera 6 ist direkt mit dem Transformationsmodul 26 verbunden, um eine Spurmarkierung ebenfalls $\lambda$-$\delta$ zu transformieren.

Die entsprechenden Daten werden einem Zonenberechnungsmodul 28 zugeführt und sodann in einem Kollisionsberechnungsmodul 30 eine Kollisionsberechnung vorgenommen.

Je nach Definition der verschiedenen Zonen können die $\lambda$-$\delta$ transformierten Objektinformationen direkt dem Kollisionsberechnungsmodul 30 zugeführt werden.

Wird durch die Berechnungen eine Gefahr einer Kollision mit einem Objekt erkannt, wird ein entsprechendes Signal an das Spurhalteassistenzmodul 20 gegeben, das einen Spurwechsel verhindert. Das Spurhalteassistenzmodul 20 berechnet anhand der Umstände ein notwendiges Lenkmoment, um das Kraftfahrzeug 2 in der Spur zu halten.

Im Falle eines gewollten Spurwechsels ist das Spurwechselassistenzmodul 20 deaktiviert, beispielsweise durch Verwendung eines Blinkers. Wird dabei eine Kollisionswarnung durch das Kollisionsberechnungsmodul 30 erzeugt, wird das Spurwechselassistenzmodul 20 reaktiviert.

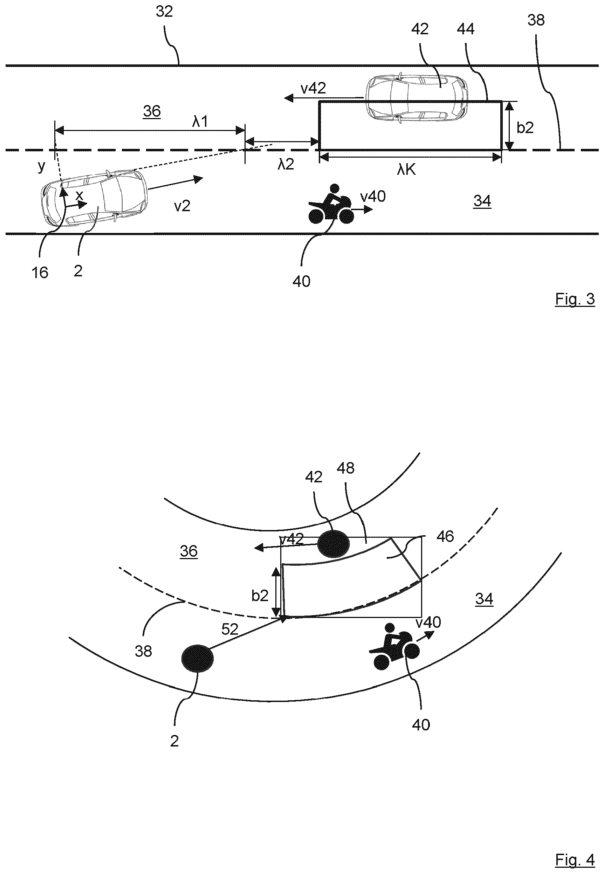

Fig. 3 zeigt eine Fahrsituation auf einer Straße 32.

Die Straße 32 weist eine Spur 34 und eine Gegenspur 36 auf. Spur 34 und Gegenspur 36 sind durch eine Spurmarkierung 38 voneinander getrennt.

Das Kraftfahrzeug 2 fährt hinter einem Motorrad 40 hinterher und möchte dies überholen. Das Motorrad 40 fährt mit einer Geschwindigkeit v40, die langsamer ist als eine Geschwindigkeit v2 des Kraftfahrzeugs. Auf der Gegenspur 36 fährt ein Kraftfahrzeug 42, das mit einer Geschwindigkeit v42 fährt.

Eine Kraftfahrzeugzone 44 wird von dem Fahrassistenzsystem 4 des Kraftfahrzeugs 2 berechnet. Dazu wird zunächst eine Messung der notwendigen Parameter vorgenommen, unter anderem des Verlaufs der Spurmarkierung 38, der Geschwindigkeiten v2, v40 und v42, einer Position und eines Abstandes des Kraftfahrzeugs 42 vom Kraftfahrzeug 2 sowie eine maximale Dauer des Überholmanövers des Motorrads 40. Anhand der betreffenden, ermittelten Daten kann eine Länge $\lambda K$ der Kraftfahrzeugzone 44 berechnet werden, aus einer Breite des Kraftfahrzeugs 2 sowie notwendigen Sicherheitsabständen kann eine Breite b2 der Kraftfahrzeugzone 2 berechnet werden.

Die betreffenden Größen werden stets im Kraftfahrzeugbezugssystem 16 berechnet und die entsprechenden Abstände $\lambda$-$\delta$-transformiert.

$\delta$ ist dabei definiert über einen Abstand eines Punktes von der Spurmarkierung 38. Der Abstand ist das Minimum einer Distanz zwischen dem betreffenden Punkt und der die Spurmarkierung approximierenden Polynomfunktion. Der entsprechende Punkt auf der Polynomfunktion wird Fußpunkt genannt.

$\lambda$ ist dabei eine Distanz, gemessen von einem Fußpunkt der Polynomfunktion der Spurmarkierung 38 mit der y-Achse und einer Länge auf der Polynomfunktion bis zum Fußpunkt, die sich über ein Linienintegral berechnen lässt.

Wie im Zusammenhang mit Fig. 4 zu sehen ist, sind diese Koordinaten invariant gegenüber dem Straßenverlauf der Straße 32, da die entsprechende Länge stets dem Linienintegral entspricht, unabhängig davon, ob die Parameter der quadratischen und höheren Terme der Polynomfunktion ungleich Null sind oder nicht. Anders ausgedrückt, jeder Straßenverlauf wird jeweils für das Fahrassistenzsystem 4 gleich abgebildet.

Dadurch kann, wie in Fig. 4 gezeigt, eine Kraftfahrzeugzone 46 auch ein Kreisringsabschnitt oder eine andere Form der Breite b2 aufweisen, die sich jeweils entlang der Spurmarkierung 38 der Straße bewegt. Das Kraftfahrzeug 42 liegt außerhalb der Kraftfahrzeugzone 46, sodass keine Warnung erzeugt wird.

Herkömmliche Berechnungsmethoden würden ohne die betreffende $\lambda$-$\delta$-Transformation eine rechteckige Kraftfahrzeugzone 48 definieren, die die korrekte Kraftfahrzeugzone 46 vollkommen überdeckt. In der Kraftfahrzeugzone 48 würde das Kraftfahrzeug 42 als Kollisionsgefahr erkannt werden, obwohl eine solche Kollisionsgefahr in der Realität nicht vorliegt, also würde ein falsch-positives Warnsignal ausgegeben werden.

Die Berechnung der Kraftfahrzeugzone 44 aus Fig. 3 erfolgt wie folgt: Zunächst wird eine Zeit berechnet, die das Kraftfahrzeug 2 braucht, bis es die Spurmarkierung 38 schneidet. Diese Berechnung kann auf verschiedene Arten erfolgen. Eine Möglichkeit ist, eine Position des Kraftfahrzeuges 2 innerhalb der Spur 34 und einen Abstand der vorderen, hier linken, Ecke des Kraftfahrzeugs 2 zur Spurmarkierung festzustellen. Wenn dann die Trajektorie 52 des Kraftfahrzeugs 2 und damit seine Relativgeschwindigkeit in Richtung der Spurmarkierung 38 bekannt sind, kann die notwendige Zeit ermittelt werden. Alternativ ist es möglich, die Kraftfahrzeugtrajektorie 52 in Kraftfahrzeugkoordinaten zu beschreiben und den zu erwartenden Schnittpunkt, hier die vordere linke Ecke, des Kraftfahrzeugs 2 mit der Polynomfunktion der Spurmarkierung 38 gleichzusetzen. Hieraus ergibt sich eine Distanz dieses Schnittpunktes in x-Richtung in Kraftfahrzeugkoordinaten 16, die mit der Geschwindigkeit v2 des Kraftfahrzeugs 2 ins Verhältnis gesetzt wird.

Vorliegend wird angenommen, dass die Objektzonen der Fahrzeuge 40 und 42 punktförmig sind. Dann ist es erforderlich, die Kraftfahrzeugzone 44 nach vorne zu verschieben, also vom Kraftfahrzeug 2 in Fahrtrichtung nach vorne weg, denn das entgegenkommende Kraftfahrzeug 42 bewegt sich innerhalb der Zeit, die das Kraftfahrzeug 2 zum Erreichen der Spurmarkierung 38 braucht, in seine Fahrtrichtung mit einer Relativgeschwindigkeit v2x - v42 relativ zum Kraftfahrzeug 2.

Die Kraftfahrzeugzone 44 hat eine Länge, die sich aus der Geschwindigkeit v2 des Kraftfahrzeugs 2 und einer Abschätzung einer Dauer des Überholvorgangs des Motorrads 40 bestimmt.

Wie in Figur 3 dargestellt, liegt das Kraftfahrzeug 42 in der Kraftfahrzeugzone 44, also herrscht Kollisionsgefahr. Das Assistenzsystem 44 wird ein Lenkmoment erzeugen, um das Kraftfahrzeug 2 innerhalb der Spur 34 zu halten, bis das Kraftfahrzeug 42 aus der Kraftfahrzeugzone 44 gefahren ist.

Alternativ ist es möglich, ausgedehnte Objektzonen zu berechnen. Dann wird aus der Geschwindigkeit des Kraftfahrzeugs 42, seiner Breite und anderen Parametern eine Objektzone für das Kraftfahrzeug 42 definiert. Kollisionsgefahr wird dann angenommen, wenn die Kraftfahrzeugzone des Kraftfahrzeug 42 und Kraftfahrzeugzone des Kraftfahrzeugs 2 überlappen.

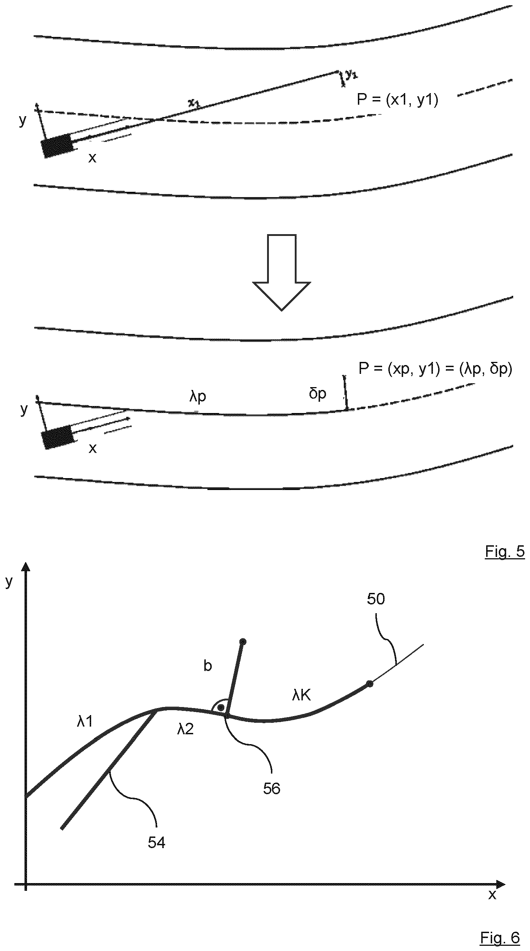

Fig. 5 zeigt eine Transformation von regulären Objektkoordinaten im Kraftfahrzeugkoordinatensystem 16 zu $\lambda$-$\delta$ Koordinaten.

Der Punkt P stellt einen Abstand zum Kraftfahrzeug 42. Statt den Punkt P als Tupel x1, y1 anzugeben, wird der Punkt P als Tupel mit $\lambda$p, $\delta$p angegeben, wobei $\lambda$ und $\delta$ wie zuvor beschrieben bestimmt sind als Länge auf der Spurmarkierung 38 und dem Abstand dazu. Der Vorteil dieser Bestimmung ist, dass $\lambda$p und $\delta$p durch den Straßenverlauf der entsprechenden Straße nicht beeinflusst werden, also eine vom Straßenverlauf unabhängige und damit präzisere Beschreibung möglich ist.

Fig.6 zeigt eine weitere Darstellung der $\lambda$-$\delta$-Koordinaten in einem Koordinatensystem.

Die Spurmarkierung wird als Polynomfunktion 50 angegeben. Der Graph der Polynomfunktion 50 wird in mehrere Teile aufgeteilt. Zunächst wird der Graph der Polynomfunktion 50 geschnitten mit einer Trajektorie 54 der vorderen linken Ecke des Kraftfahrzeugs 2. Der Abstand bis zu diesem Punkt wird als $\lambda$1 bezeichnet. Der Abstand $\lambda$ berechnet sich, wie im Zusammenhang mit Fig. 3 beschrieben, aus der Relativgeschwindigkeit des entgegenkommenden Kraftfahrzeugs 42. Die Kraftfahrzeugzone 44 hat dann ab dort anschließend eine Länge $\lambda$K und eine Breite b, die als $\delta$-Koordinate als Normalen eines Fußpunktes 56 definiert ist.

Obwohl der Gegenstand im Detail durch Ausführungsbeispiele näher illustriert und erläutert wurde, so ist die Erfindung nicht durch die offenbarten Beispiele eingeschränkt und andere Variationen können vom Fachmann hieraus abgeleitet werden. Es ist daher klar, dass eine Vielzahl von Variationsmöglichkeiten existiert. Es ist ebenfalls klar, dass beispielhaft genannte Ausführungsformen nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa einer weitergehenden Erläuterung in der Beschreibung, definiert wird.

Bezugszeichenliste

| | |
|---|---|
| 2 | Kraftfahrzeug |
| 4 | Fahrassistenzsystem |
| 6 | Kamera |
| 8 | Radarsensor |
| 10 | Raddrehzahlsensor |
| 12 | Lenkwinkelsensor |
| 14 | Lenkaktuator |
| 15 | Steuerung |
| 15.1 | Recheneinheit |
| 15.2 | Speicher |
| 16 | Kraftfahrzeugkoordinatensystem |
| 18 | Spurwechselassistenzmodul |
| 20 | Spurhalteassistenzmodul |
| 22 | Datenfusionsmodul |
| 24 | Auswahlmodul |
| 26 | Transformationsmodul |
| 28 | Zonenberechnungsmodul |
| 30 | Kollisionsberechnungsmodul |
| 32 | Straße |
| 34 | Spur |
| 36 | Gegenspur |
| 38 | Spurmarkierung |
| 40 | Motorrad |
| 42 | Kraftfahrzeug |
| 44 | Kraftfahrzeugzone |
| 46 | Kraftfahrzeugzone |
| 48 | Kraftfahrzeugzone |
| 50 | Polynomfunktion |
| 52 | Trajektorie |
| 54 | Trajektorie |
| 56 | Fußpunkt |
| b2 | Breite |
| o | Ursprung |
| v2 | Geschwindigkeit Kraftfahrzeug 2 |
| v40 | Geschwindigkeit Motorrad |
| v42 | Geschwindigkeit Kraftfahrzeug 42 |
| λ1 | Länge |
| λ2 | Länge |
| λK | Länge Kraftfahrzeugzone 44 |
| λp | Objektabstandskomponente |
| δ1 | Abstand |
| δp | Objektabstandskomponente |
| x | Kraftfahrzeuglängsrichtung |
| y | Kraftfahrzeugquerrichtung |

**Patentansprüche**

1. Verfahren zur Spurwechselassistenz, wobei ein Kraftfahrzeug (2) auf einer ersten Spur (34) einer Straße (32) in einer Richtung mit Spurwechselwunsch fährt, wobei mithilfe von Umgebungssensorik (6, 8) wenigstens ein Objekt (40, 42) in einem Umgebungsbereich des Kraftfahrzeugs (2) auf einer zur ersten Spur (34) benachbarten zweiten Spur (36) identifiziert wird, wobei eine Relativposition (P) des wenigstens einen Objekts (40, 42) zum Kraftfahrzeug (2) in Kraftfahrzeugkoordinaten (16) ermittelt wird, wobei mithilfe der Umgebungssensorik (6, 8) ein Verlauf einer Spurmarkierung (38), die die erste Spur (34) und die zweite Spur (36) voneinander trennt, in Fahrtrichtung vor dem Kraftfahrzeug (2) liegend in Kraftfahrzeugkoordinaten (16) ermittelt wird, wobei anhand von Kraftfahrzeugsensorik (10, 12) eine Trajektorie (52) des Kraftfahrzeugs (2) in Kraftfahrzeugkoordinaten (16) ermittelt wird, wobei für das wenigstens eine Objekt (40, 42) eine Objektzone (λp, δp) ermittelt wird, wobei eine Kraftfahrzeugzone (44, 46) ermittelt wird, innerhalb derer Kollisionsgefahr herrscht, wobei die Kraftfahrzeugzone (44, 46) auf der zweiten Spur (36) liegt, wobei geprüft wird, ob die Kraftfahrzeugzone (44, 46) und die Objektzone (λp, δp) überlappen, wobei, wenn die Kraftfahrzeugzone (44, 46) und die Objektzone (λp, δp) überlappen, ein ein Kollisionsrisiko definierendes Signal erzeugt wird, wobei die Kraftfahrzeugzone (44, 46) und die Objektzone (λp, δp) in λ- δ-Koordinaten angegeben werden, wobei δ einen Abstand eines Punktes (P) der Objektzone (λp, δp) von der Spurmarkierung (38) beschreibt, wobei λ eine Länge entlang der Spurmarkierung (38) beschreibt, **dadurch gekennzeichnet, dass** die Kraftfahrzeugzone (44, 46) in λ- δ-Koordinaten entlang der Spurmarkierung (38) in einer vorgegebenen Breite (b2) bestimmt wird, wobei eine Länge (λK) der Spurmarkierung (38) als Produkt einer Maximalzeit und der relativen Geschwindigkeit (v2x-v42) des Kraftfahrzeugs (2) und des wenigstens einen Objekts (42) zueinander bestimmt wird.

2. Verfahren nach Anspruch 1, wobei ein Spurhalteassistent (20) deaktiviert wird, wenn ein Spurwechselwunsch signalisiert wird.

3. Verfahren nach Anspruch 2, wobei der Spurhalteassistent (20) reaktiviert wird, wenn das ein Kollisionsrisiko definierende Signal von einer Steuerung (15) empfangen wird.

4.  Verfahren nach einem der vorangegangenen Ansprüche, wobei von der Umgebungssensorik (6, 8) erkannte Objekte verworfen werden, die sich nicht auf der Straße (32) befinden.

5.  Verfahren nach einem der vorangegangenen Ansprüche, wobei der Verlauf der Spurmarkierung (38) als Polynomfunktion (50) in den Kraftfahrzeugkoordinaten (16) approximiert wird.

6.  Verfahren nach einem der vorangegangenen Ansprüche, wobei die Trajektorie (52) aus Geschwindigkeit (v2) und Lenkwinkel des Kraftfahrzeugs (2) in Kraftfahrzeugkoordinaten (16) bestimmt wird.

7.  Verfahren nach einem der vorangegangenen Ansprüche, wobei Sensorinformationen verschiedener Umgebungssensoren (6, 8, 10, 12) zusammengeführt werden.

8.  Verfahren nach einem der vorangegangenen Ansprüche, wobei die vorgegebene Breite (b2) als euklidischer Abstand zur Polynomfunktion (50) der Spurmarkierung (38) in Kraftfahrzeugkoordinaten (16) bestimmt wird.

9.  Verfahren nach einem der vorangegangenen Ansprüche, wobei ein Startpunkt der Kraftfahrzeugzone (44) von einem Kreuzungspunkt des Kraftfahrzeugs (2) mit der Spurmarkierung (38) bestimmt wird, wobei ein Endpunkt der Kraftfahrzeugzone (44) definiert wird als der Punkt, an dem ein Linienintegral der Polynomfunktion der Spurmarkierung (38) die gleiche Länge hat wie die Geschwindigkeit (v2) des Kraftfahrzeugs (2) multipliziert mit der maximalen Zeit.

10. Verfahren nach einem der vorangegangenen Ansprüche, wobei die wenigstens eine Objektzone ($\lambda$p, $\delta$p) den Ort (P) des wenigstens einen Objektes (42) darstellt.

11. Verfahren nach einem der Ansprüche 1 bis 9, wobei die Objektzone ($\lambda$p, $\delta$p) eine vorgegebene Breite (b2) aufweist, wobei die Breite (b2) über einen euklidischen Abstand (b) zur Polynomfunktion (50) der Spurmarkierung (38) bestimmt wird.

12. Verfahren nach einem der vorangegangenen Ansprüche, wobei die Objektzone ($\lambda$p, $\delta$p) eine vorgegebene Länge aufweist, die der Geschwindigkeit des Objekts (v2) multipliziert mit der maximalen Zeit entspricht.

13. Computerlesbares Speichermedium (15.2) mit einem Computerprogrammprodukt, dass Befehle enthält, die, wenn sie von wenigstens einer Recheneinheit (15.1) ausgeführt werden, bewirken, dass die wenigstens eine Recheneinheit (15.1) dazu eingerichtet ist, das Verfahren nach einem der vorangegangenen Ansprüche auszuführen.

14. Kraftfahrzeug mit einer Vorrichtung umfassend Mittel zur Durchführung des Verfahrens nach einem der Ansprüche 1 - 12.

**Claims**

1.  Method for lane change assistance, wherein a motor vehicle (2) is driving on a first lane (34) of a road (32) in a direction with a lane change request, wherein at least one object (40, 42) in an area surrounding the motor vehicle (2) on a second lane (36) adjacent to the first lane (34) is identified with the aid of environmental sensors (6, 8), wherein a relative position (P) of the at least one object (40, 42) to the motor vehicle (2) is determined in motor vehicle coordinates (16), wherein a course of a lane marking (38) which separates the first lane (34) and the second lane (36) from one another is determined in motor vehicle coordinates (16) in the direction of travel in front of the motor vehicle (2), wherein a trajectory (52) of the motor vehicle (2) is determined in motor vehicle coordinates (16) using motor vehicle sensors (10, 12), wherein for the at least one object (40, 42) an object zone ($\lambda$p, $\delta$p) is determined, wherein a motor vehicle zone (44, 46) is determined within which there is a risk of collision, wherein the motor vehicle zone (44, 46) lies on the second lane (36), wherein it is checked whether the motor vehicle zone (44, 46) and the object zone ($\lambda$p, $\delta$p) overlap, wherein, if the motor vehicle zone (44, 46) and the object zone ($\lambda$p, $\delta$p) overlap, a signal defining a risk of collision is generated, wherein the motor vehicle zone (44, 46) and the object zone ($\lambda$p, $\delta$p) are specified in $\lambda$ - $\delta$ coordinates, wherein $\delta$ describes a distance of a point (P) of the object zone ($\lambda$p, $\delta$p) from the lane marking (38), wherein $\lambda$ describes a length along the lane marking (38),
    **characterized in that**
    the motor vehicle zone (44, 46) in $\lambda$- $\delta$ coordinates along the lane marking (38) in a predetermined width (b2), wherein a length ($\lambda$K) of the lane marking (38) is determined as the product of a maximum time and the relative speed (v2x-v42) of the motor vehicle (2) and the at least one object (42) to one another.

2.  The method according to claim 1, wherein a lane keeping assistant (20) is deactivated when a lane change request is signaled.

3.  The method according to claim 2, wherein the lane departure warning system (20) is reactivated when the signal defining a collision risk is received from a controller (15).

4. Method according to one of the preceding claims, wherein objects detected by the environmental sensors (6, 8) which are not located on the road (32) are discarded.

5. Method according to one of the preceding claims, wherein the course of the lane marking (38) is approximated as a polynomial function (50) in the motor vehicle coordinates (16).

6. Method according to one of the preceding claims, wherein the trajectory (52) is determined from speed (v2) and steering angle of the motor vehicle (2) in motor vehicle coordinates (16).

7. Method according to one of the preceding claims, wherein sensor information from different environmental sensors (6, 8, 10, 12) is combined.

8. Method according to one of the preceding claims, wherein the predetermined width (b2) is determined as a Euclidean distance to the polynomial function (50) of the lane marking (38) in motor vehicle coordinates (16).

9. Method according to one of the preceding claims, wherein a starting point of the motor vehicle zone (44) is determined from an intersection point of the motor vehicle (2) with the lane marking (38), wherein an end point of the motor vehicle zone (44) is defined as the point at which a line integral of the polynomial function of the lane marking (38) has the same length as the speed (v2) of the motor vehicle (2) multiplied by the maximum time.

10. Method according to one of the preceding claims, wherein the at least one object zone ( $\lambda$p , $\delta$p ) represents the location (P) of the at least one object (42).

11. Method according to one of claims 1 to 9, wherein the object zone ($\lambda$p, $\delta$p) has a predetermined width (b2), wherein the width (b2) is determined via a Euclidean distance (b) to the polynomial function (50) of the track marking (38).

12. Method according to one of the preceding claims, wherein the object zone ($\lambda$p, $\delta$p) has a predetermined length which corresponds to the speed of the object (v2) multiplied by the maximum time.

13. Computer-readable storage medium (15.2) with a computer program product that contains instructions that, when executed by at least one computing unit (15.1), cause the at least one computing unit (15.1) to be configured to carry out the method according to one of the preceding claims.

14. Motor vehicle with a device comprising means for carrying out the method according to one of claims 1 - 12.

**Revendications**

1. Procédé d'assistance au changement de voie, dans lequel un véhicule automobile (2) circule sur une première voie (34) d'une route (32) dans une direction avec une demande de changement de voie, dans lequel au moins un objet (40, 42) dans une zone entourant le véhicule automobile (2) sur une deuxième voie (36) adjacente à la première voie (34) est identifié à l'aide de capteurs environnementaux (6, 8), dans lequel une position relative (P) de l'au moins un objet (40, 42) par rapport au véhicule automobile (2) est déterminée dans des coordonnées de véhicule automobile (16), dans lequel un tracé d'un marquage de voie (38) qui sépare la première voie (34) et la deuxième voie (36) l'une de l'autre est déterminé dans des coordonnées de véhicule automobile (16) dans la direction de déplacement devant le véhicule automobile (2), dans lequel une trajectoire (52) du véhicule automobile (2) est déterminée dans des coordonnées de véhicule automobile (16) à l'aide de capteurs de véhicule automobile (10, 12), dans lequel pour l'au moins un objet (40, 42) une zone d'objet ($\lambda$p, $\delta$p) est déterminée, une zone de véhicule automobile (44, 46) étant déterminée dans laquelle il existe un risque de collision, la zone de véhicule automobile (44, 46) se trouvant sur la deuxième voie (36), il est vérifié si la zone de véhicule automobile (44, 46) et la zone d'objet ($\lambda$p, $\delta$p) se chevauchent, un signal définissant un risque de collision étant généré si la zone de véhicule automobile (44, 46) et la zone d'objet ($\lambda$p, $\delta$p) se chevauchent, la zone de véhicule automobile (44, 46) et la zone d'objet ($\lambda$p, $\delta$p) étant spécifiées dans des coordonnées $\lambda$ - $\delta$ , $\delta$ décrivant une distance d'un point (P) de la zone d'objet ($\lambda$p, $\delta$p) à partir du marquage de voie (38), $\lambda$ décrivant une longueur le long du marquage de voie (38), **caractérisé en ce que**
la zone de véhicule automobile (44, 46) et la zone d'objet ($\lambda$p, $\delta$p) sont définies ... (44, 46) dans des coordonnées $\lambda$- $\delta$ le long du marquage de voie (38) dans une largeur prédéterminée (b2), une longueur ( $\lambda$K ) du marquage de voie (38) étant déterminée comme le produit d'un temps maximal et de la vitesse relative (v2x-v42) du véhicule à moteur (2) et du ou des objets (42) l'un par rapport à l'autre.

2. Procédé selon la revendication 1, dans lequel un assistant de maintien de voie (20) est désactivé lorsqu'une demande de changement de voie est signalée.

3. Procédé selon la revendication 2, dans lequel le système d'avertissement de sortie de voie (20) est réactivé lorsque le signal définissant un risque de collision est reçu d'un contrôleur (15).

4. Procédé selon l'une des revendications précédentes, dans lequel les objets détectés par les capteurs environnementaux (6, 8) qui ne se trouvent pas sur la route (32) sont écartés.

5. Procédé selon l'une des revendications précédentes, dans lequel le tracé du marquage de voie (38) est approximé sous forme d'une fonction polynomiale (50) dans les coordonnées du véhicule automobile (16).

6. Procédé selon l'une des revendications précédentes, dans lequel la trajectoire (52) est déterminée à partir de la vitesse (v2) et de l'angle de braquage du véhicule automobile (2) dans les coordonnées du véhicule automobile (16).

7. Procédé selon l'une des revendications précédentes, dans lequel des informations de capteur provenant de différents capteurs environnementaux (6, 8, 10, 12) sont combinées.

8. Procédé selon l'une des revendications précédentes, dans lequel la largeur prédéterminée (b2) est déterminée comme une distance euclidienne à la fonction polynomiale (50) du marquage de voie (38) dans les coordonnées du véhicule à moteur (16).

9. Procédé selon l'une des revendications précédentes, dans lequel un point de départ de la zone de véhicule automobile (44) est déterminé à partir d'un point d'intersection du véhicule automobile (2) avec le marquage au sol (38), un point final de la zone de véhicule automobile (44) étant défini comme le point auquel une intégrale de ligne de la fonction polynomiale du marquage au sol (38) a la même longueur que la vitesse (v2) du véhicule automobile (2) multipliée par le temps maximal.

10. Procédé selon l'une des revendications précédentes, dans lequel la ou les zones d'objet ($\lambda p$, $\delta p$) représentent l'emplacement (P) de la ou des zones d'objet (42).

11. Procédé selon l'une des revendications 1 à 9, dans lequel la zone d'objet ($\lambda p$, $\delta p$) présente une largeur (b2) prédéterminée, la largeur (b2) étant déterminée par l'intermédiaire d'une distance euclidienne (b) à la fonction polynomiale (50) du marquage de piste (38).

12. Procédé selon l'une des revendications précédentes, dans lequel la zone d'objet ($\lambda p$, $\delta p$) présente une longueur prédéterminée qui correspond à la vitesse de l'objet (v2) multipliée par le temps maximum.

13. Support de stockage lisible par ordinateur (15.2) avec un produit programme informatique qui contient des instructions qui, lorsqu'elles sont exécutées par au moins une unité de calcul (15.1), amènent la ou les unités de calcul (15.1) à être configurées pour mettre en œuvre le procédé selon l'une des revendications précédentes.

14. Véhicule automobile équipé d'un dispositif comprenant des moyens pour mettre en œuvre le procédé selon l'une des revendications 1 à 12.

Fig. 1

Fig. 2

32

42 44 38

v42

36 λ1

b2

y

λ2 λK

x

v2 v40

34

16 2

40

Fig. 3

42 48

36 v42

46

b2

34

38 52 v40

2 40

Fig. 4

P = (x1, y1)

P = (xp, y1) = (λp, δp)

λp        δp

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3489926 A1

- DE 102011106485 A1

**In der Beschreibung aufgeführte Nicht-Patentliteratur**

- The combinatorial aspect of motion planning: Maneuver variants in structured environments. **BENDER PHILIPP et al.** 2015 IEEE Intelligent Vehicles Symposium (IV). IEEE, 28 June 2015, 1386-1392

- Optimal trajectory generation for dynamic street scenarios in a Frenet Frame. **MORITZ WERLING et al.** 2010 IEEE International Conference On Robotics And Automation. IEEE, 03 May 2010, 987-993